Europäisches Patentamt

European Patent Office

Office européen des brevets

(19)

(11) Veröffentlichungsnummer: **0 220 162**
**A1**

(12) **EUROPÄISCHE PATENTANMELDUNG**

(21) Anmeldenummer: 86890230.5

(22) Anmeldetag: 19.08.86

(51) Int. Cl.⁴: **G 01 B 7/28**
G 01 B 7/02

(30) Priorität: 24.10.85 AT 3067/85

(43) Veröffentlichungstag der Anmeldung:
29.04.87 Patentblatt 87/18

(84) Benannte Vertragsstaaten: **BE DE FR GB IT**

(71) Anmelder: **VOEST-ALPINE Aktiengesellschaft**
**Muldenstrasse 5**
**A-4020 Linz (AT)**

(72) Erfinder:
**Die Erfinder haben auf ihre Nennung verzichtet**

(74) Vertreter: **Hübscher, Gerhard, Dipl.-Ing. et al**
**Patentanwälte Dipl.-Ing. Gerhard Hübscher Dipl.-Ing.**
**Helmut Hübscher Dipl.-Ing. Heiner Hübscher**
**Spittelwiese 7**
**A-4020 Linz (AT)**

(54) Vorrichtung zur Welligkeitsmessung eines Bleches.

(57) Zur Welligkeitsmessung eines Bleches (6) sind eine Induktionsspule (4) zum Induzieren von Wirbelströmen in dem Blech (6) und eine Auswerteschaltung (15) vorgesehen.

Um Umgebungseinflüsse auszuschalten und die Meßgenauigkeit zu erhöhen, liegt die Induktionsspule (4) elektrisch in Reihe mit einer Toroidspule (7), wobei räumlich zwischen dem Blech (6) und der Induktionsspule (4) eine von der Induktionsspule (4) galvanisch getrennte Meßspule (5) vorgesehen ist. Diese Meßspule (5) und die Toroidspule (7) sind dabei an eine Vergleicherstufe (14) der Auswerteschaltung (15) angeschlossen.

FIG. 2

**Beschreibung**

Vorrichtung zur Welligkeitsmessung eines Bleches

Die Erfindung bezieht sich auf eine Vorrichtung zur Welligkeitsmessung eines Bleches mit einer in dem Blech Wirbelströme induzierenden Induktionsspule und mit einer Auswerteschaltung.

Um den gesteigerten Anforderungen beim Walzen von Blechen Rechnung tragen zu können, ist es notwendig, auch die Welligkeit zu erfassen. Zu diesem Zweck ist es bekannt, in dem Blech über eine Induktionsspule Wirbelströme zu induzieren, deren Rückwirkung auf das Erregerfeld vom Abstand der Induktionsspule vom Blech abhängt. Über eine Auswerteschaltung, beispielsweise eine Brückenschaltung, bei der die Induktionsspule einen Brückenzweig bildet, kann somit der jeweilige Abstand der Blechoberfläche von einer Sollinie und damit die Welligkeit des Bleches bestimmt werden. Nachteilig bei diesen bekannten Vorrichtungen zur Welligkeitsmessung ist allerdings, daß die Empfindlichkeit der Messung rasch mit größer werdendem Abstand der Induktionsspule von der Blechoberfläche abnimmt und folglich keine ausreichend großen Abstände zwischen dem Blech und der Induktionsspule bei einem zufriedenstellenden Meßergebnis sichergestellt werden können. Außerdem werden Temperatureinflüsse, die sich auf den Widerstand im Kreis der Induktionsspule auswirken nicht berücksichtigt, so daß insbesondere beim Warmwalzen von Blechen mit erheblichen Meßfehlern zu rechnen ist.

Der Erfindung liegt somit die Aufgabe zugrunde, diese Mängel zu vermeiden und eine Vorrichtung der eingangs geschilderten Art mit einfachen Mitteln so zu verbessern, daß die Welligkeit eines Blechbandes unabhängig von der Walztemperatur mit einer vergleichsweise hohen Empfindlichkeit erfaßt und eine ausreichende Meßgenauigkeit auch bei größeren Abständen zwischen der Induktionsspule und der Blechoberfläche sichergestellt werden kann.

Die Erfindung löst die gestellte Aufgabe dadurch, daß die Induktionsspule elektrisch in Reihe mit einer Toroidspule liegt, daß räumlich zwischen dem Blech und der Induktionsspule eine von der Induktionsspule galvanisch getrennte Meßspule vorgesehen ist und daß die Meßspule und die Toroidspule an einer Vergleicherstufe der Auswerteschaltung angeschlossen sind.

Die zwischen dem Blech und der Induktionsspule vorgesehene Meßspule ist aufgrund ihrer räumlichen Anordnung besser mit dem elektromagnetischen Feld der im Blech induzierten Wirbelströme als die Induktionsspule gekoppelt, so daß eine höhere Empfindlichkeit für die Abstandsmessung erreicht und ein ausreichender Abstand zwischen der Blechoberfläche und der Meßspule sichergestellt wird. Die Rückwirkung der Wirbelstromfelder auf die Induktionsspule ist außerdem vergleichsweise gering, was besonders vorteilhafte Meßvoraussetzungen ergibt.

Durch das Vorsehen einer in Reihe mit der Induktionsspule geschalteten Toroidspule wird darüber hinaus eine Umgebungseinflüsse ausschaltende Vergleichsmessung ermöglicht, weil die Toroidspule und die Induktionsspule bzw. die Meßspule denselben Umgebungseinflüssen ausgesetzt sind. Umgebungstemperaturen wirken sich somit in allen Spulen in gleicher Weise aus, so daß bei einem Bezug der an der Meßspule erfaßten Meßgröße auf eine entsprechende Meßgröße der Toroidspule sich gleichwirkende Umgebungseinflüsse nicht auf das Meßergebnis auswirken können. Eine Beeinflussung des Erregerfeldes für die Induktionsströme durch das Feld der Toroidspule ist nicht zu befürchten, weil die Toroidspule ein vernachlässigbar kleines Streufeld aufweist und die Spulenanordnung in einfacher Weise so getroffen werden kann, daß die Felder der Toroidspule und der Meßspule bzw. der Induktionsspule zueinander senkrecht stehen.

Die Messungen an der Meßspule können unmittelbar mit den Messungen an der Toroidspule verglichen werden. Vorteilhaftere Verhältnisse werden allerdings sichergestellt, wenn die Toroidspule die Primärwicklung eines Übertragers bildet, dessen ebenfalls aus einer Toroidspule bestehende Sekundärwicklung an die Vergleicherstufe der Auswerteschaltung angeschlossen ist, weil durch diesen Übertrager eine freie Potentialwahl für die Auswerteschaltung und eine Abstimmung der Meßgrößen durch eine entsprechende Wahl des Übersetzungsverhältnisses möglich ist. Außerdem können gleiche Phasenwinkel sichergestellt werden, was die Vergleichsmessung vereinfacht.

Grundsätzlich ist es möglich, entweder den Strom oder die Spannung zur Abstandsbestimmung des Bleches von der Meßspule zu erfassen. Einfachere Verhältnisse ergeben sich allerdings, wenn die Spannung an der Meßspule und an der Toroidspule bzw. am Übertrager gemessen wird, weil in einem solchen Fall mit einer einfachen Wechselspannungsquelle das Auslangen gefunden werden kann. Außerdem läßt sich die Welligkeit besonders günstig bestimmen, wenn die Vergleicherstufe der Auswerteschaltung aus einem Differenzglied für die an der Meßspule einerseits und an der Toroidspule bzw. an dem Übertrager anderseits abgegriffenen Spannungen besteht. Sind die an der Meßspule und an der Toroidspule bzw. am Übertrager abgegriffenen Spannungen beim Sollverlauf des Bleches gleich groß, was beispielsweise durch eine entsprechende Wahl des Übersetzungsverhältnisses des Übertragers sichergestellt werden kann, so kann aus der Differenz der an der Vergleicherstufe anliegenden Spannungen unmittelbar die Welligkeit des Bleches abgelesen werden.

Um den die Spulen aufweisenden Meßkopf vor mechanischen Beschädigungen schützen zu können, kann schließlich zwischen dem Blech und der Meßspule eine geschlitzte Abdeckplatte mit einer an den Außendurchmesser der Meßspule angepaßten Ausnehmung vorgesehen sein. Die an den Außendurchmesser der Meßspule angepaßte Ausnehmung in der Abdeckplatte erlaubt einen weitgehend störungsfreien Durchtritt des elektromagnetischen Feldes, wobei durch den Schlitz eine störende Wirbelstromausbildung in einem ausreichenden Maß unterdrückt werden kann.

In der Zeichnung ist der Erfindungsgegenstand beispielsweise dargestellt. Es zeigen

Fig. 1 einen Meßkopf einer erfindungsgemäßen Vorrichtung zur Welligkeitsmessung eines Bleches in einem schematischen Axialschnitt,

Fig. 2 ein vereinfachtes Blockschaltbild einer Vorrichtung zur Welligkeitsmessung eines Bleches und

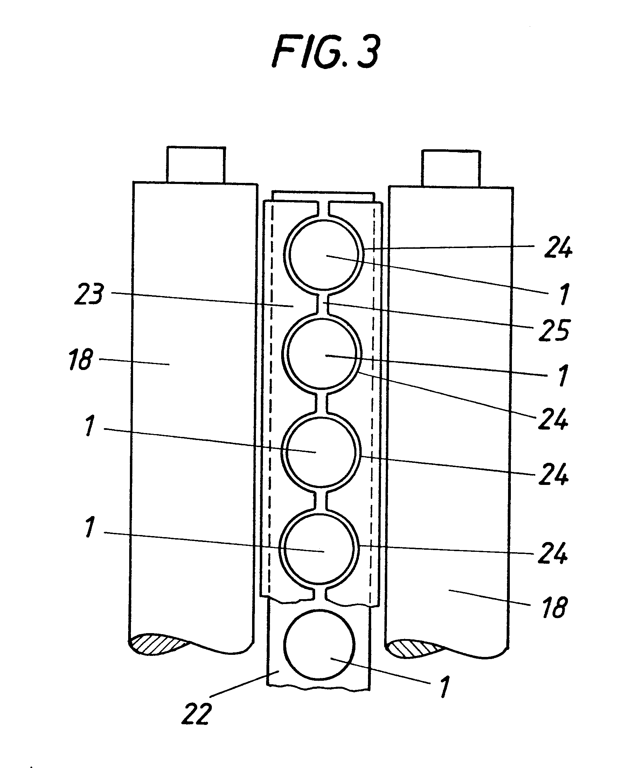

Fig. 3 eine Draufsicht auf einen durch eine Abdeckplatte abgedeckten Meßkopf.

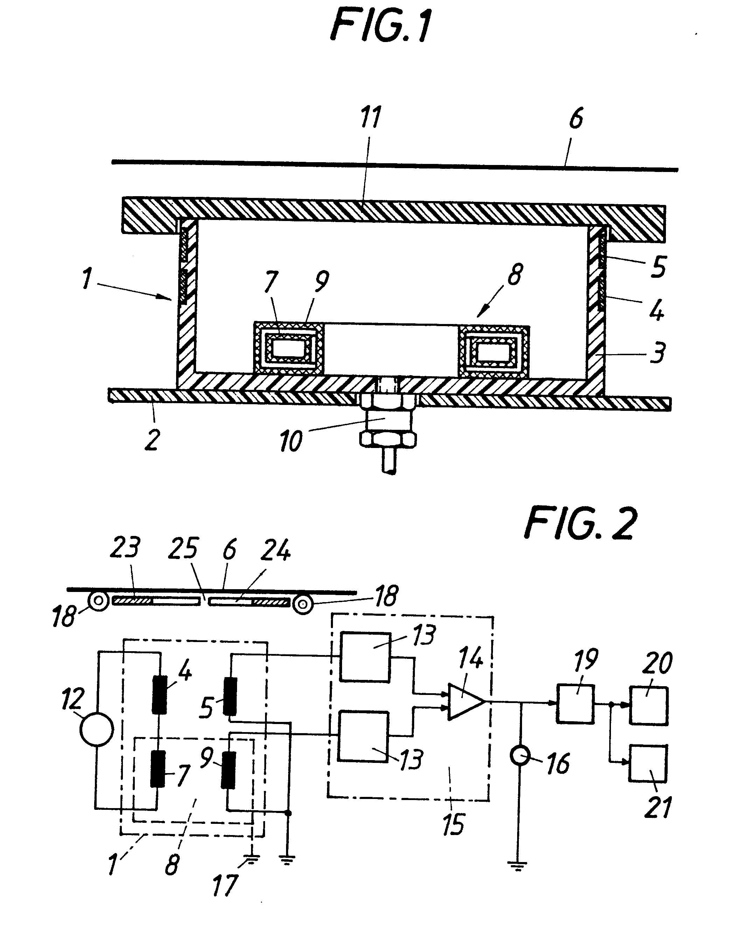

Der in Fig. 1 dargestellte Meßkopf 1 besteht im wesentlichen aus einem auf einer Grundplatte 2 angeordneten, aus Kunststoff bestehenden, topfförmigen Spulenkörper 3, der eine zylindrische Induktionsspule 4 und eine von der Induktionsspule 4 galvanisch getrennte Meßspule 5 trägt, die ebenfalls als Zylinderspule ausgebildet ist. Die Anordnung ist dabei so getroffen, daß die Induktionsspule 4 und die koaxiale Meßspule 5 gegeneinander in Achsrichtung höhenversetzt sind, wobei die Meßspule 5 räumlich zwischen der Induktionsspule 4 und dem zu messenden Blech 6 zu liegen kommt.

Elektrisch in Serie mit der Induktionsspule 4 ist eine Toroidspule 7 vorgesehen, die die Primärwicklung eines Übertragers 8 bildet, dessen Sekundärwicklung aus einer die Toroidspule 7 umschließenden Toroidspule 9 besteht. Die Anschlüsse der einzelnen Spulen erfolgt über eine Kabelzufuhr 10 durch die Grundplatte 2 hindurch. Zum Schutz des Meßkopfes 1 ist eine Kunststoffabdeckplatte 11 vorgesehen, die über aus Übersichtlichkeitsgründen nicht dargestellte Spannschrauben mit der Grundplatte 2 verbunden ist.

Wie der Fig. 2 entnommen werden kann, wird die Serien schaltung der Induktionsspule 4 und der Toroidspule 7 an eine hochfrequente Wechselspannungsquelle 12 angeschlossen, so daß über das elektromagnetische Wechselfeld der Induktionsspule 4 in dem zu messenden Blech 6, das senkrecht zur Achse der Induktionsspule 4 verläuft, Wirbelströme induziert werden, mit deren Feld die Meßspule 5 gekoppelt ist, so daß in der Meßspule 5 eine Spannung induziert wird, die vom Abstand des Bleches 6 vom Meßkopf 1 abhängt. Diese in der Meßspule 5 induzierte Spannung wird über einen Gleichrichter 13 an eine Vergleicherstufe 14 einer Auswerteschaltung 15 angelegt, die außerdem über einen Gleichrichter 13 an dem Übertrager 8 angeschlossen ist. Da die Vergleicherstufe aus einem Differenzglied besteht, wird die Differenz der an der Meßspule 5 abgegriffenen Spannung und der Spannung an der Toroidspule 9 des Übertragers 8 für die Welligkeitsmessung herangezogen, wobei diese Differenzspannung über einen Spannungsanzeiger 16 abgelesen werden kann. Diese vergleichende Messung hat den Vorteil, daß Umgebungseinflüsse sich nicht auf das Meßergebnis in Form von Meßfehlern auswirken können, weil diese Umgebungseinflüsse in gleicher Weise auf alle Spulen wirken, so daß die am Übertrager 8 abgegriffene Vergleichsgröße denselben Änderungen wie die Meßgröße unterworfen ist. Es können daher beispielsweise Widerstandsänderungen zufolge von Temperatureinflüssen das Meßergebnis nicht verfälschen.

Die Felder des Übertragers 8 stören dabei die Messung nicht, weil die Toroidspulen 7 und 9 des Übertragers 8 ein geringes Streufeld aufweisen und dieses Streufeld senkrecht zum Erregerfeld der Induktionsspule 4 verläuft. Zusätzlich kann der Übertrager 8 noch geschirmt ausgebildet werden. wie dies durch die Erdung 17 in Fig. 2 angedeutet ist.

Da im allgemeinen mehrere Meßköpfe 1 über die Breite des Bleches 6 angeordnet sich, das sich im Bereich dieser Meßköpfe auf Rollen 18 abstützt, kann durch den Vergleich der Meßergebnisse dieser Meßköpfe auch eine Grundwelligkeit des Bleches für die Steuerung der Walzgerüste unberücksichtigt bleiben, weil bei dieser Grundwelligkeit die Längsfasern über die Blechbreite gleich lang sind. Um von der Differenzspannung am Ausgang der Vergleicherstufe 14 auf die unterschiedliche Faserlänge und damit auf die Welligkeit des Bleches 6 schließen zu können, ist an die Vergleicherstufe 14 ein Rechner 19 angeschlossen, wobei die Rechenergebnisse auf einem Monitor 20 angezeigt oder von einem Drucker bzw. Schreiber 21 abgelesen werden können.

Zum mechanischen Schutz der vorteilhaft auf einem Wager 22 angeordneten Meßköpfe 1 ist zwischen den Meßköpfen 1 und dem Blech 6 eine Abdeckplatte 23 vorgesehen, die an den Außenumfang der Meßspule 5 bzw. der Meßköpfe 1 angepaßte Ausnehmungen 24 für die einzelnen Meßköpfe und einen durchgehenden Schlitz 25 aufweist. Die Ausnehmungen 24 erlauben dabei einen ausreichenden Felddurchtritt, während der Schlitz 25 in der Abdeckplatte 23 eine größere Ausbreitung von Wirbelströmen verhindert, so daß das Meßergebnis durch solche Wirbelströme nicht beeinträchtigt werden kann. Eine Schlitzbreite von beispielsweise 1 cm hat sich in der Praxis als vorteilhaft erwiesen, weil bei einer solchen Schlitzbreite eine Überbrückung des Schlitzes durch Zunder und Verschmutzungen ausgeschlossen werden kann. Wird die Vorrichtung beim Warmwalzen von Blechen eingesetzt, so wird die Abdeckplatte 23 vorzugsweise mit einer inneren Wasserkühlung versehen.

## Patentansprüche

1. Vorrichtung zur Welligkeitsmessung eines Bleches mit einer in dem Blech Wirbelströme induzierenden Induktionsspule (4) und mit einer Auswerteschaltung (15), dadurch gekennzeichnet, daß die Induktionsspule (4) elektrisch in Reihe mit einer Toroidspule (7) liegt, daß räumlich zwischen dem Blech (6) und der Induktionsspule (4) eine von der Induktionsspule (4) galvanisch getrennte Meßspule (5) vorgesehen ist und daß die Meßspule (5) und die Toroidspule (7) an einer Vergleicherstufe (14) der Auswerteschaltung (15) angeschlossen sind.

2. Vorrichtung nach Anspruch 1, dadurch gekennzeichnet, daß die Toroidspule (7) die Primärwicklung eines Übertragers (8) bildet, dessen ebenfalls aus einer Toroidspule (9) bestehende Sekundärwicklung an die Vergleicherstufe (14) der Auswerteschaltung (15) angeschlossen ist.

3. Vorrichtung nach Anspruch 1 oder 2, dadurch gekennzeichnet, daß die Vergleicherstufe (14) aus einem Differenzglied für die an der Meßspule (5) einerseits und an der Toroidspule (7) bzw. an dem Übertrager (8) anderseits abgegriffenen Spannungen besteht.

4. Vorrichtung nach einem der Ansprüche 1 bis 3, dadurch gekennzeichnet, daß zwischen dem Blech (6) und der Meßspule (5) eine geschlitzte Abdeckplatte (23) mit einer an den Außendurchmesser der Meßspule (5) angepaßten Ausnehmung (24) vorgesehen ist.

0220162

# FIG.1

# FIG.2

# FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-1 935 742 (TOKYO SHIBAURA ELECTRIC CO.) * Figur 8; Seite 12, Zeile 29 - Seite 13, Zeile 5; Seiten 1-4 * | 1-3 | G 01 B 7/28 G 01 B 7/02 |
| A | US-A-3 256 610 (ARMCO STEEL CORP.) * Insgesamt * | 1-4 | |
| A | US-A-3 703 097 (KAISER ALUMINUM & CHEMICAL CORP.) * Figuren 2-4,6; Spalte 2, Zeilen 45-65; Spalte 6, Zeile 30 - Spalte 8, Zeile 56 * | 1-4 | |
| A | US-A-3 316 486 (BOEING CO.) * Figuren; Spalte 1, Zeile 10 - Spalte 3, Zeile 12 * | 1-3 | RECHERCHIERTE SACHGEBIETE (Int. Cl.4) |
| A | FR-A-2 185 452 (VEREINIGTE FLUGTECHNISCHE WERKE-FOKKER GmbH) * Figuren 5,6; Seite 4, Zeile 30 - Seite 5, Zeile 11 * | 1-3 | G 01 B 7/00 G 01 N 27/00 B 21 B 37/00 |
| A | DE-A-2 605 473 (M. GORTAT) * Insgesamt * | 1-3 | |

Der vorliegende Recherchenbericht wurde für alle Patentansprüche erstellt.

| Recherchenort DEN HAAG | Abschlußdatum der Recherche 04-12-1986 | Prüfer BROCK T.J. |
|---|---|---|